(19) Europäisches Patentamt
European Patent Office
Office européen des brevets

(11) **EP 3 445 633 B1**

(12) **EUROPÄISCHE PATENTSCHRIFT**

(45) Veröffentlichungstag und Bekanntmachung des Hinweises auf die Patenterteilung:
**12.02.2020 Patentblatt 2020/07**

(21) Anmeldenummer: **17718057.7**

(22) Anmeldetag: **18.04.2017**

(51) Int Cl.:
*B61H 5/00* (2006.01)          *F16D 55/224* (2006.01)
*B61H 13/38* (2006.01)

(86) Internationale Anmeldenummer:
**PCT/EP2017/059084**

(87) Internationale Veröffentlichungsnummer:
**WO 2017/182415 (26.10.2017 Gazette 2017/43)**

(54) **BREMSEINRICHTUNG FÜR EIN SCHIENENFAHRZEUG UND VERFAHREN ZUM BESTIMMEN EINES BREMSMOMENTS EINER SOLCHEN BREMSEINRICHTUNG**

BRAKING DEVICE FOR A RAIL VEHICLE AND METHOD FOR DETERMINING A BRAKING TORQUE OF SAID TYPE OF BRAKING DEVICE

FREIN POUR VÉHICULE FERROVIAIRE ET PROCÉDÉ POUR DÉTERMINER UN COUPLE DE FREINAGE D'UN TEL SYSTÈME DE FREIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2016 DE 102016107319**

(43) Veröffentlichungstag der Anmeldung:
**27.02.2019 Patentblatt 2019/09**

(73) Patentinhaber: **KNORR-BREMSE Systeme für Schienenfahrzeuge GmbH 80809 München (DE)**

(72) Erfinder:
• **MATHIEU, Michael**
  **82178 Puchheim (DE)**
• **HECHT, Ferdinand**
  **85229 Markt Indersdorf (DE)**
• **NIEPALA, Tomasz**
  **85375 Neufahrn (DE)**
• **KRAUS, Harry-Werner**
  **81825 München (DE)**
• **JUNG, Alexander**
  **82131 Gauting (DE)**
• **FUDERER, Erich**
  **82256 Fürstenfeldbruck (DE)**

(56) Entgegenhaltungen:
**WO-A2-2009/118350          WO-A2-2010/069520
DE-A1-102013 008 227**

**Beschreibung**

Die Erfindung betrifft eine Bremseinrichtung für ein Schienenfahrzeug mit einer Bremszangeneinheit, die über mindestens einen Bremsbelag auf eine Bremsscheibe einwirkt, und die mittels mindestens eines Verbindungselements an einer Konsole eines Fahrwerks des Schienenfahrzeugs befestigbar ist, wobei über das mindestens eine Verbindungselement Lagerreaktionskräften von der Bremszangeneinheit auf die Konsole übertragbar sind, und wobei an der Konsole und/oder der Bremszangeneinheit und/oder an dem mindestens einen Verbindungselement zwischen der Konsole und der Bremszangeneinheit mindestens ein Kraftsensor zur Messung von zumindest einer der Lagerreaktionskräfte angeordnet ist, um ein auf die Bremsscheibe wirkendes Bremsmoment zu ermitteln. Die Erfindung betrifft weiterhin ein Verfahren zum Bestimmen eines auf die Bremsscheibe wirkendes Bremsmoments bei einer Bremseinrichtung.

Um eine Bremseinrichtung eines Schienenfahrzeugs beim Bremsvorgang möglichst präzise ansteuern zu können, ist im Betrieb eine ausreichen genaue Messung des Bremsmoments, das auf die Bremsscheibe und damit auf die gebremste Fahrzeugachse wirkt, erforderlich. Bei Kenntnis des gemessenen Bremsmoments kann dieses durch eine entsprechende Regelung der Ansteuerung eines Aktivators der Bremszangeneinheit an ein gewünschtes Bremsmoment angepasst werden. Anstelle einer technisch nur schwierig oder gar nicht zu realisierenden direkten Messung des Bremsmoments wird dieses üblicherweise als Produkt einer Reibkraft, auch Bremskraft genannt, und eines Bremsradius berechnet. Die Reibkraft bezeichnet die beim Bremsen aufgrund der Reibung zwischen dem Bremsbelag und der Bremsscheibe tangential wirkende Kraft. Der Bremsradius gibt den Abstand von der Drehachse der Bremsscheibe bis zu dem Ansatzpunkt der Reibkraft an. Hierbei werden mittlere (effektive) Werte für Bremskraft und Bremsradius angenommen, die die üblicherweise verteilt auf einer größeren Fläche zwischen dem Bremsbelag und der Bremsscheibe wirkenden Kräfte zusammenfassend beschreiben.

Aus der Druckschrift WO 2009/118 350 A2 ist eine Bremseinrichtung der eingangs genannten Art bekannt, bei der eine Mehrzahl von Kraftsensoren vorgesehen sind, die an der Tragstruktur der Bremszangeneinheit oder der Bremszangeneinheit selbst montiert sind und die mit der Reibkraft in nicht näher beschriebener Weise korrelierte Werte ausgeben. Diese Werte werden als Ist-Werte mit vorgegebenen Sollwerten verglichen, um die Bremseinrichtung bezüglich ihrer Bremswirkung zu regeln.

Aus der Druckschrift WO 2010/069 520 A2 ist eine ähnliche Anordnung bekannt, bei der zwei Kraftsensoren vorgesehen sind, die an einer Tragstruktur einer horizontal ausgerichteten Bremszangeneinheit die in voneinander beabstandeten Befestigungsstellen der Tragstruktur vertikal wirkenden Kräfte ermitteln. Die Bremszangeneinheit ist dabei entlang einer waagerechten Achse angeordnet, auf der sowohl der Mittelpunkt der Bremsscheibe, als auch der nominelle Kraftangriffspunkt der Reibkraft liegen. Die beiden Kraftsensoren ermöglichen eine quantitative Bestimmung der Reibkräfte unter der Annahme, dass der nominelle Kraftangriffspunkt auf der genannten horizontalen Achse liegt, also bei tangentialer Ausrichtung keine horizontale Kraftkomponente aufweist

Durch verschiedene äußere Faktoren, beispielsweise eine Einfederung des Fahrwerks, ein Tragbild der Bremse oder eine inhomogenen Verteilung des Flächenanpressdrucks zwischen Bremsbelag und Bremsscheibe, kommt es in der Praxis jedoch zu einer Verschiebung des Kraftangriffspunkts der Reibkraft und damit verbunden eine Verdrehung des Reibkraftvektors Die der Berechnung der Reibkraft zugrunde liegende Annahme, dass der Kraftangriffspunkt der Reibkraft auf der horizontalen Achse liegt, sind dann nicht mehr erfüllt, wodurch ein nicht korrekter Wert der Reibkraft und damit des Bremsmoments ermittelt wird.

Es ist daher eine Aufgabe der vorliegenden Erfindung, eine Bremseinrichtung bzw. ein Verfahren zur Bestimmung eines Bremsmoments bei einer Bremseinrichtung zu schaffen, die auch bei einer Verschiebung des Kraftangriffspunkts der Reibkraft im Betrieb der Bremseinrichtung die Bestimmung eines korrekten Werts für das Bremsmoment ermöglichen. Es ist insbesondere dabei eine Aufgabe, den korrekten Wert des Bremsmoments mit einer möglichst geringen Anzahl an Kraftsensoren zu ermitteln. Diese Aufgabe wird durch eine Bremseinrichtung bzw. ein Verfahren mit den Merkmalen des jeweiligen unabhängigen Anspruchs gelöst. Vorteilhafte Ausgestaltungen und Weiterbildungen sind jeweils Gegenstand der abhängigen Ansprüche.

Erfindungsgemäß ist bei einer Bremseinrichtung der eingangs genannten Art das mindestens eine Verbindungelement so ausgebildet und/oder ausgerichtet, dass zumindest eine der Lagerreaktionskräfte im Wesentlichen durch eine Drehachse der Bremsscheibe gerichtet ist.

Dass die zumindest eine Lagerreaktionskraft durch die Drehachse der Bremsscheibe gerichtet ist, bedeutet, dass die Kraft entweder auf die Drehachse hinweist, oder gerade von der Drehachse wegweist. Eine Verlängerung des Kraftvektors, der an einem Lagerpunkt angreift, verläuft also durch die Drehachse. Die Kraft verläuft mit anderen Worten radial zur Drehachse der Bremsscheibe. Die Drehachse braucht dabei nicht zwingend mathematisch exakt auf die Drehachse ausgerichtet sein, jedoch so, dass sie zumindest annähernd auf die Drehachse der Bremsscheibe ausgerichtet ist.

Lagerreaktionskräfte sind die Kräfte, mit denen die Bremszangeneinheit im Bremsvorgang auf die Konsole, also auf das Fahrgestell einwirkt. Der durch die Masse der Bremszangeneinheit hervorgerufene Gewichtskraftanteil der Lagerreaktionskräfte sei dabei nicht berücksichtigt, entweder indem er nicht mitbestimmt wird, oder indem er vernachlässigt wird, da er klein gegenüber der beim Bremsen auftretenden Kraftanteile ist. Unter Berücksichtigung aller auftretenden Lagerreaktionskräfte errechnet sich das Bremsmoment als die Summe der Drehmomente, die die jeweilige Lagerreaktionskraft auf die Drehachse der Bremsscheibe ausübt. Lagerreaktionskräfte, die durch die Drehachse gerichtet sind, weisen gegenüber der Drehachse jedoch keinen Hebel auf, um ein Drehmoment ausüben zu können. Diese Lagerreaktionskräfte tragen folglich nicht zum Bremsmoment bei.

Durch das Gestalten der Aufhängung der Bremszangeneinheit derart, dass mindestens eine, vorteilhafterweise auch mehrere der Lagerreaktionskräfte radial zur Bremsscheibe verlaufen und damit für das Bremsmoment irrelevant werden, verringert sich die Anzahl der für das Bremsmoment relevanten Lagerreaktionskräfte. Entsprechend brauchen nicht alle Lagerreaktionskräfte gemessen zu werden, um das Bremsmoment zu bestimmen. Die Anzahl der benötigten Kraftsensoren kann verringert werden, was geringere Kosten und eine weniger aufwändige Auswertung und damit eine höhere Betriebssicherheit zur Folge hat.

In einer vorteilhaften Ausgestaltung der Bremseinrichtung ist das mindestens eine Verbindungselement zwischen der Konsole und der Bremszangeneinheit ein Längsbolzen, der so ausgerichtet ist, dass eine Verlängerung seiner Längsachse durch die Drehachse der Bremsscheibe verläuft. Auf diese Weise kann eine in Richtung der Längsachse wirkende Lagerreaktionskraft für die Bestimmung des Bremsmoments außer Acht gelassen werden und braucht nicht gemessen zu werden. Das Bremsmoment kann so mit nur zwei Kraftsensoren exakt ermittelt werden. Der Längsbolzen kann beispielsweise ein Kraftmessbolzen sein, der dazu eingerichtet ist, quer, insbesondere senkrecht, zu seiner Längsachse an zwei beabstandeten Punkten jeweils eine Lagerreaktionskraft zu messen. Alternativ können auch zwei voneinander beabstandete Kraftsensoren in der Konsole oder an der Bremszangeneinheit angeordnet sein, die dazu eingerichtet sind, jeweils eine der Lagerreaktionskräfte zu messen, die quer und insbesondere senkrecht auf die Längsachse des Längsbolzen wirkt.

In einer weiteren vorteilhaften Ausgestaltung der Bremseinrichtung sind zwei Querbolzen als Verbindungselemente zwischen der Konsole und der Bremszangeneinheit eingesetzt, von denen einer die Konsole und die Bremszangeneinheit unmittelbar schwenkbar miteinander verbindet und der andere die Konsole und die Bremszangeneinheit über eine beidseitg schwenkbar gelagerte Hängelasche miteinander verbindet. Ein in dem Lager des ersten Querbolzens wirkender und auf die Drehachse gerichter Anteil der Lagerreaktionskraft braucht nicht berücksichtigt werden. Entsprechend braucht am ersten Querbolzen nur eine tangential zur Drehachse wirkende Kraft gemessen werden. Durch die Verwendung einer Hängelasche zur Kraftübertragung am zweiten Querbolzen kann zudem hier Kraft nur in Richtung der Hängelasche wirken, die ebenfalls gemessen wird. Damit reichen wiederum zwei skalar gemessene Kräfte aus, um das Bremsmoment vollständig zu bestimmen. Eine Messung der relevanten Lagerreaktionskräfte kann dadurch erfolgen, dass die beiden Querbolzen Kraftmessbolzen sind, die dazu eingerichtet sind, quer zu ihrer Längsachse jeweils eine der relevanten Lagerreaktionskräfte zu messen.

In einer weiteren vorteilhaften Ausgestaltung der Bremseinrichtung sind die Verbindungselemente zwischen der Konsole und der Bremszangeneinheit zwei Hängelaschen und zwei beidseitig um parallel zur Drehachse verlaufende Achsen schwenkbar gelagerte Lenker, wobei eine jeweilige Verlängerung der Längsachse der Lenker durch die Drehachse verläuft. Durch die besondere Ausrichtung der Lenker treten für das Bremsmoment relevante Lagerreaktionskräfte nur in den Hängelaschen auf. Wiederum sind zwei Kraftsensoren zur vollständigen Bestimmung des Bremsmoments ausreichend. Die Kraftsensoren können beispielsweise dazu eingerichtet sein, in Längsrichtung der Hängelaschen wirkende Kräfte als Lagerreaktionskräfte zu messen. Bei gemeinsamer Aufhängung der Hängelaschen genügt sogar ein Kraftmesswert zur Berechnung des Bremsmoments.

Ein erfindungsgemäßes Verfahren zum Bestimmen eines auf eine Bremsscheibe wirkenden Bremsmoments bei einer Bremseinrichtung eines Schienenfahrzeugs weist die folgenden Schritte auf: Es wird eine Bremseinrichtung bereitgestellt, die eine Bremszangeneinheit aufweist, die über mindestens einen Bremsbelag auf eine Bremsscheibe einwirkt, und die mittels mindestens eines Verbindungselements an einer Konsole eines Fahrwerks des Schienenfahrzeugs befestigt ist, wobei über das mindestens eine Verbindungselement Lagerreaktionskräfte von der Bremszangeneinheit auf die Konsole übertragen werden. Die Bremseinrichtung ist derart ausgestaltet, dass zumindest eine der Lagerreaktionskräfte durch eine Drehachse der Bremsscheibe gerichtet ist. Im Betrieb der Bremse werden alle verbleibenden Lagerreaktionskräfte, die nicht durch eine Drehachse der Bremsscheibe gerichtet sind, gemessen. Aus der mindestens einen gemessenen Lagerreaktionskraft und eines Abstands, in dem diese Lagerreaktionskraft auf die Drehachse wirkt, wird das Bremsmoment bestimmt. Der Abstand ist dabei durch die Konstruktion und Anordnung der Bremseinrichtung bestimmt.

Die Erfindung wird nachfolgend anhand von Ausführungsbeispielen mit Hilfe von Figuren näher erläutert. Die Figuren zeigen:

Figur 1 eine Draufsicht auf ein erstes Ausführungsbeispiel einer anmeldungsgemäßen Bremseinrichtung mit Bremsscheibe und Bremszangeneinheit;

Figur 2 eine Seitenansicht der Bremseinrichtung des ersten Ausführungsbeispiels mit eingezeichneten wirkenden Kräften;

Figur 3    eine Seitenansicht eines zweiten Ausführungsbeispiel einer anmeldungsgemäßen Bremseinrichtung mit eingezeichneten wirkenden Kräften;

Figur 4    eine isometrische Schrägansicht eines dritten Ausführungsbeispiel einer anmeldungsgemäßen Bremseinrichtung; und

Figur 5    eine Seitenansicht des dritten Ausführungsbeispiels einer Bremseinrichtung mit eingezeichneten wirkenden Kräften.

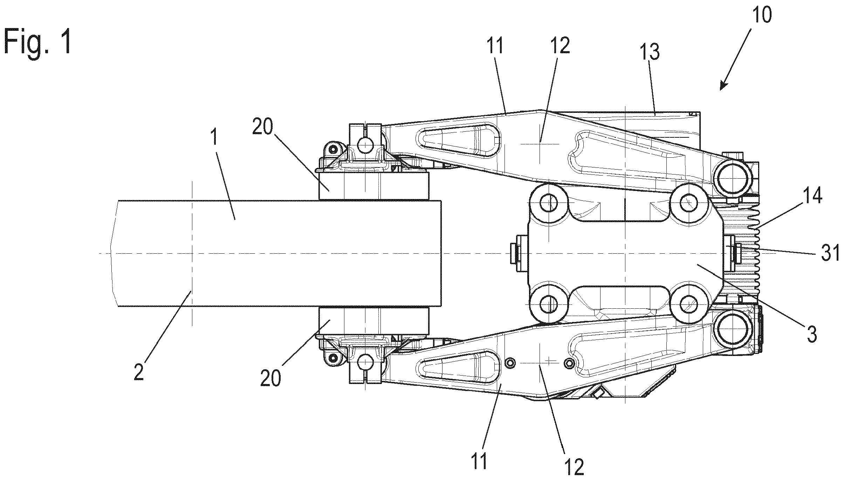

Figur 1 zeigt in einer schematischen Draufsicht eine Bremseinrichtung für ein Schienenfahrzeug.

Die Bremseinrichtung weist eine Bremsscheibe 1 auf, die um eine Drehachse 2 drehbar gelagert ist. Die Bremsscheibe 1 kann in bekannter Weise eine Wellen- oder eine Radbremsscheibe sein. Die Bremseinrichtung weist eine Bremszangeneinheit 10 auf, die zwei Bremsbeläge 20 trägt, die zum Bremsen von beiden Seiten auf die Oberfläche der Bremsscheibe 1 gepresst werden können. Die Bremsbeläge 20 sind zu diesem Zweck durch Bremszangenhebel 11 gehalten, die innerhalb der Bremszangeneinheit 10 jeweils in einer Lagerstelle 12 verschwenkbar sind. In der Mitte der Bremszangenhebel 11 ist ein hier nicht näher dargestellter Aktuator 13 angeordnet, der hydraulisch oder pneumatisch betrieben die Bremszangenhebel 11 in den Lagerstellen 12 zusammen zieht und entsprechend die Bremsbeläge 20 auf die Bremsscheibe 1 presst. Weiter ist an dem den Bremsbelägen 20 gegenüberliegenden Ende der Bremszangenhebel 11 ein Druckstangensteller 14 zum Nachstellen der Bremseinrichtung bei Abnutzung der Bremsbeläge 20 angeordnet.

Die Bremszangeneinheit 10 ist über einen Längslagerbolzen 31 als Verbindungselement mit einer Konsole 3 verbunden, die über entsprechende Befestigungsmittel fest an einem Fahrwerk, beispielsweise einem Drehgestell, eines Schienenfahrzeugs montiert wird. Die Konsole 3 kann auch als fester Bestandteil des Drehgestellrahmens funktionell in diesen integriert sein.

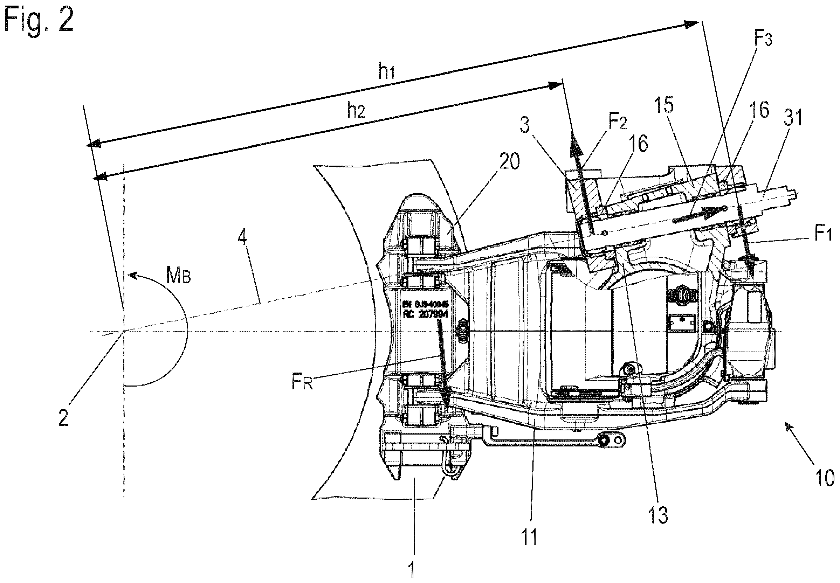

Figur 2 zeigt die Bremseinrichtung der Figur 1 in einer schematischen, teilgeschnittenen Seitenansicht. Der Teilschnitt ist im Bereich der Konsole 3 und des Längslagerbolzens 31 ausgeführt, wodurch die Verbindung der Bremszangeneinheit 10 über einen entsprechenden Montagesockel 15 mit der Konsole 3 durch den Längslagerbolzen 31 sichtbar ist.

Beim Betrieb der Bremseinrichtung werden die Bremsbeläge 20 mit einer bestimmten Anpresskraft auf die Oberfläche der Bremsscheibe 1 gepresst. Zwischen den Bremsbelägen 20 und der Bremsscheibe 1 entstehen in jedem Flächenelement der Bremsbeläge 20 Reibkräfte, deren auf die Bremsscheibe 1 ausgeübte Gegenkräfte ein Bremsmoment an der Drehachse der Bremsscheibe 1 erzeugen. Die Reibkraft eines Flächenelements ist dabei von dem auf das Flächenelement wirkenden Druck sowie einem Reibwert zwischen diesen Flächenelement und der Oberfläche der Bremsscheibe 1 abhängig. Das von diesem Flächenelement zu einem gesamten Bremsmoment $M_B$ beigesteuerte Drehmoment bestimmt sich aus dem Abstand des jeweiligen Flächenelements von der Drehachse 2 der Bremsscheibe 1 und der vom Flächenelement 1 erfahrenen Reibkraft. Das Bremsmoment $M_B$ ergibt sich dann als Integral über die gesamte Fläche der Bremsbeläge 20. Das Bremsmoment $M_B$ kann dargestellt werden als eine gemittelte oder effektive Reibkraft $F_R$, die an einem mittleren Reibradius wirkt. Diese Reibkraft $F_R$ ist in der Figur 2 beispielhaft dargestellt. Prinzipiell ist die Bestimmung des Bremsmoments $M_B$ bei Kenntnis der Größe und Richtung der Reibkraft $F_R$ und des mittleren Reibradius möglich.

Im Rahmen der Anmeldung wird eine alternative Art der Ermittlung des Bremsmoments $M_B$ eingesetzt, die von Lagerreaktionskräften $F_i$ ausgeht. Die Lagerreaktionskräfte $F_i$ sind die Kräfte, mit denen die Bremszangeneinheit 10 beim Bremsvorgang auf die Konsole 3, also auf das Fahrgestell einwirkt. Der durch die Masse der Bremszangeneinheit 10 hervorgerufene Gewichtskraftanteil an den Lagerreaktionskräften $F_i$ sei dabei nicht berücksichtigt.

Unter Berücksichtigung aller auftretenden Lagerrekationskräfte $F_i$ ergibt sich für das Bremsmoment:

$$M_B = \Sigma \, F_i \cdot h_i \qquad (\text{Gl. 1}),$$

wobei $h_i$ den jeweiligen Abstand der Kraftwirkungslinie der entsprechenden Lagerreaktionskraft $F_i$ von der Drehachse 2 der Bremsscheibe 1 bezeichnet. Die Summenbildung wird dabei über eine Anzahl n aller auftretenden Lagerreaktionskräfte $F_i$ durchgeführt ($1 < i < n$). Der Abstand $h_i$ der Kraftwirkungslinie einer Kraft, die an einem bestimmten Kraftansatzpunkt angreift, ist der kürzeste Abstand zwischen der Drehachse 2 der Bremsscheibe 1 und der Geraden, die durch den Kraftansatzpunkt in Richtung der entsprechenden Kraft $F_i$ führt. Wirkt die Kraft $F_i$ im Kraftansatzpunkt tangential zur Drehachse 2 der Bremsscheibe 1, entspricht der Abstand $h_i$ dem geometrischen Abstand des Kraftangriffspunktes von der Drehachse 2 der Bremsscheibe 1.

Die Gleichung 1 gibt das Bremsmoment $M_B$ unabhängig von der konstruktiven Ausgestaltung der Bremszangeneinheit und ihrer Aufhängung am Fahrgestell eines Schienenfahrzeugs wieder, wenn alle auftretenden Lagerreaktionskräfte $F_i$ berücksichtigt sind.

Bei einer anmeldungsgemäßen Bremseinrichtung ist die Aufhängung der Bremszangeneinheit 10 an der Konsole 3 und damit am Fahrgestell des Schienenfahrzeugs so ausgebildet, dass zumindest eine der La-

gerreaktionskräfte $F_i$ in radialer Richtung bezogen auf die Drehachse 2 der Bremsscheibe 1 gerichtet ist. Für solche radial ausgerichteten Lagerreaktionskräfte $F_i$ ist der zugehörige Abstand $h_i$ gleich null, weswegen diese Lagerreaktionskräfte $F_i$ keinen Anteil am Bremsmoment $M_B$ aufweisen. Mit anderen Worten ist die Länge der Hebelachse um die Drehachse 2 der Bremsscheibe 1, mit dem diese Lagerreaktionskräfte $F_i$ auf die Drehachse 2 der Bremsscheibe 1 wirken, gleich null, wodurch kein Drehmoment auf die Bremsscheibe 1 ausgeübt wird.

Bei der Bremszangeneinheit 10 der Figuren 1 und 2 ist der Längslagerbolzen 31 entlang einer Radialrichtung 4 ausgerichtet. Er ist konstruktiv also so gestaltet, dass die Verlängerung seiner Längsachse durch die Drehachse 2 der Bremsscheibe 1 führt. Über den Längslagerbolzen 31 werden die Lagerreaktionskräfte $F_1$ und $F_2$ übertragen, wobei diese senkrecht zur Radialrichtung 4 stehen und im Wesentlichen in den beiden Endbereichen des Längslagerbolzens 31 auftreten. Diese Kraftangriffspunkte sind um die konstruktiv festgelegten und daher bestimmbaren Abstände $h_1$ und $h_2$ von der Drehachse 2 der Bremsscheibe 1 beabstandet. Die Lagerreaktionskraft $F_3$, welche über eine stirnseitige Anlagefläche des Montagesockels in eine in der Konsole 3 eingelassene und zentrisch zum Lagerbolzen 15 angeordnete Axiallagerscheibe 16 in die Konsole eingeleitet wird, verläuft in der Radialrichtung 4 und trägt somit nicht zum Bremsmoment bei.

Bei der anmeldungsgemäßen Bremseinrichtung ist der Längslagerbolzen 31 als ein Kraftmessbolzen ausgebildet, der über entsprechende Sensoren die Kräfte $F_1$ und $F_2$ im Betrieb der Bremse unabhängig voneinander messen kann. Die Lagerreaktionskraft $F_3$, die keinen Einfluss auf das Bremsmoment $M_B$ hat, braucht bei dieser geometrischen Anordnung des Lagerreaktionsbolzens 31 vorteilhaft nicht gemessen werden. Es versteht sich, dass anstelle des Lagerreaktionsbolzens 31, der als Kraftmessbolzen ausgebildet ist, die Kräfte $F_1$ und $F_2$ auch durch entsprechend angeordnete Sensoren an der Konsole 3 oder an dem Montagesockel 15 der Bremszangeneinheit 10 gemessen werden können.

Vorteilhaft wird bei dem dargestellten Ausführungsbeispiel somit die Messung des Bremsmoments $M_B$ möglich, wobei nur zwei der drei auftretenden Lagerreaktionskräfte durch Sensoren gemessen werden müssen. Mit der Anzahl der Sensoren steigt der Aufwand für Auswerteelektronik, beispielsweise Messverstärker, Verkabelung usw. Mit der Zahl der Sensoren steigt entsprechend auch die Fehlerhäufigkeit, beispielsweise durch einen Ausfall eines Sensors oder der Auswerteelektronik oder einer fehlerhaften oder sich im Laufe der Zeit verstellten Kalibrierung. Die Reduzierung der Anzahl der Sensoren ist damit zum Einen kostensparend und erhöht zum Anderen die Betriebssicherheit. Das im Betrieb der Bremseinrichtung bestimmte Bremsmoment $M_B$ kann beispielsweise verwendet werden, um ein gewünschtes Bremsmoment einzustellen, das zu einer gewünschten vorbestimmten Verzögerung des Schienenfahrzeugs führt. Die Anpresskraft, mit der die Bremsbeläge 20 dann auf die Bremsscheibe 1 durch den Aktuator 13 gepresst werden, kann so geregelt werden, dass das gewünschte Bremsmoment erreicht wird.

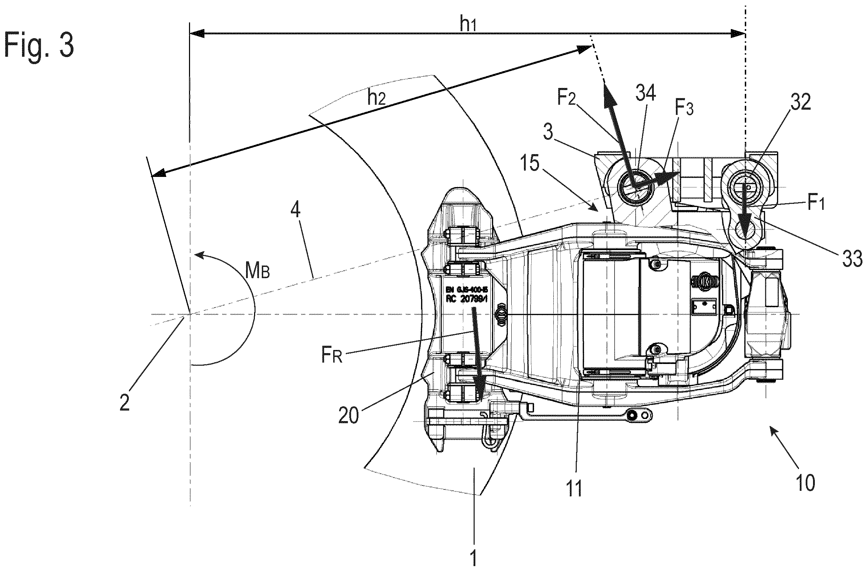

In Figur 3 ist ein gegenüber Figur 2 abgewandeltes Ausführungsbeispiel einer Bremseinrichtung dargestellt. In dieser wie den nächsten Figuren kennzeichnen gleiche Bezugszeichen gleiche oder gleichwirkende Elemente wie bei dem Ausführungsbeispiel der Figuren 1 und 2.

Von dem Ausführungsbeispiel der Figuren 1 und 2 unterscheidet sich das vorliegende im Wesentlichen nur durch die Art der Aufhängung der Bremszangeneinheit 10 an der Konsole 3. Abgesehen von dem Montagesockel 15 ist daher insbesondere die Bremszangeneinheit 10 mit der des ersten Ausführungsbeispiels, auf dessen Beschreibung hiermit explizit verwiesen wird, identisch.

Die Bremszangeneinheit 10 gemäß Figur 3 weist anstelle des verbindenden Längsbolzens 31 zwei Querbolzen 32, 34 auf, die in einer Richtung parallel zur Drehachse 2 der Bremsscheibe 1 verlaufen. Der erste, von der Drehachse 2 der Bremsscheibe 1 aus gesehene hintere Querbolzen 32 ist mit dem Montagesockel 15 der Bremszangeneinheit 10 über eine beidseitig gelenkig gelagerte Lasche 33 verbunden. Durch die Lasche 33 wirkende Zug-und/oder Druckkräfte als Lagerreaktionskräfte können konstruktiv somit nur in Richtung der Längserstreckung der Lasche 33 wirken. Die entsprechende, in der Lasche 33 wirkende Lagerreaktionskraft ist als Kraft $F_1$ in Figur 3 eingetragen. Sie wird im Betrieb der Bremseinrichtung entweder von dem Querbolzen 32 gemessen, indem dieser als Kraftmessbolzen ausgebildet ist. Alternativ kann sie beispielsweise an der Lasche 33 gemessen werden, beispielsweise durch einen Dehnungssensor.

Der Montagesockel 15 weist weiterhin eine drehfest an der Bremszangeneinheit 10 angeordnete Lasche auf, die mithilfe des zweiten Querbolzens 34 drehbar an der Konsole 3 festgelegt ist. Am zweiten Querbolzen 34 wirkt eine Lagerreaktionskraft, die sich in die beiden eingezeichneten Kraftkomponenten $F_2$ und $F_3$ aufteilen lässt. Dabei ist die Aufteilung so gewählt, dass die Kraft $F_3$ in Radialrichtung 4 wirkt und die Kraft $F_2$ senkrecht auf der Radialrichtung 4, also tangential zur Bremsscheibe 1. Im Betrieb wird die Kraft $F_2$ gemessen, wohingegen die Kraft $F_3$ für die Bestimmung des Bremsmoments $M_B$ ignoriert werden kann, da sie in Radialrichtung 4 verläuft. Zur Messung der Lagerreaktionskraft $F_2$ kann der zweite Querbolzen 34 wiederum als Kraftmessbolzen ausgebildet sein. Es versteht sich, dass eine Messung der Kraft $F_2$ auch innerhalb der Konsole 3 oder der Lasche des Befestigungssockels 15 an der Bremszangeneinheit 10 gemessen werden kann.

Neben den beiden gemessenen Lagerreaktionskräften $F_1$ und $F_2$ sind die Abstände $h_1$ und $h_2$, unter denen die Lagerreaktionskräfte $F_1$ und $F_2$ im Hinblick auf das Bremsmoment $M_B$ wirken, konstruktiv vorbekannt.

Entsprechend lässt sich analog zum ersten Ausführungsbeispiel in der Figur 1 und 2 das Bremsmoment $M_B$ aus den gemessenen Lagerreaktionskräften $F_1$ und $F_2$ bestimmen.

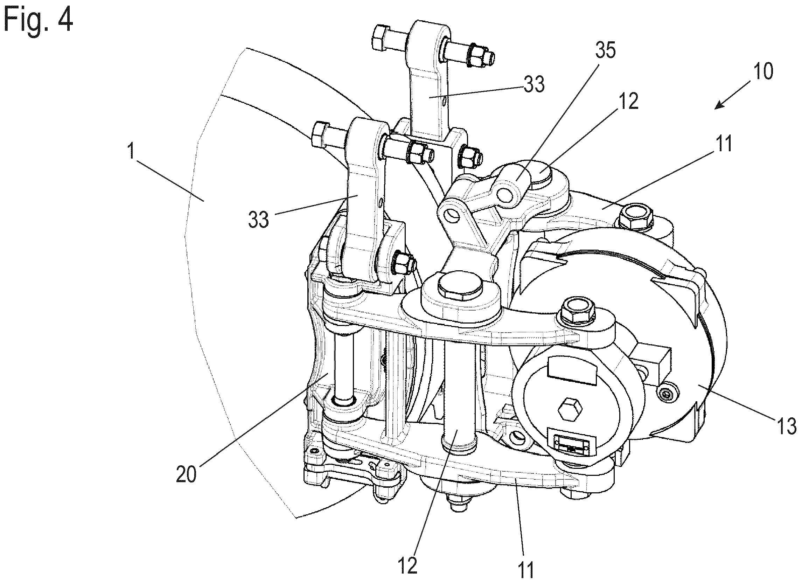

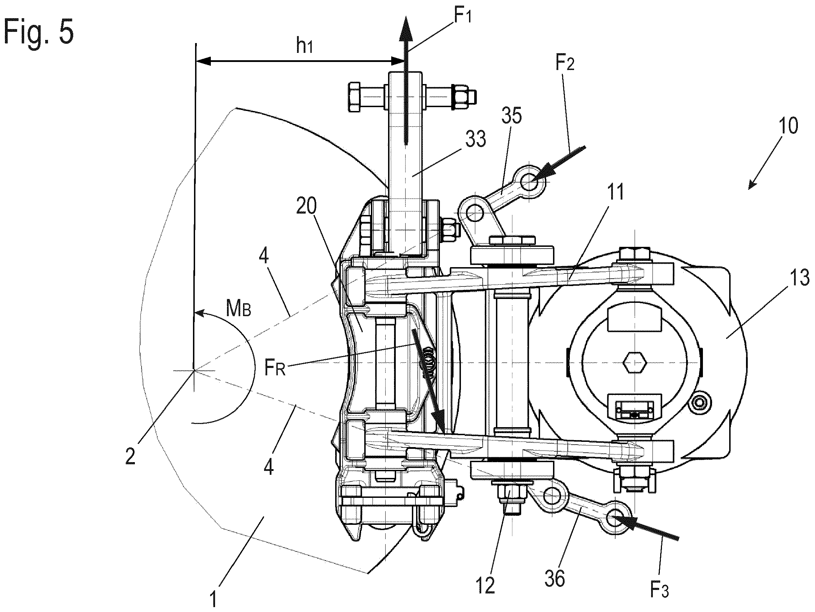

In den Figuren 4 und 5 ist ein drittes Ausführungsbeispiel einer anmeldungsgemäßen Bremseinrichtung für Schienenfahrzeuge dargestellt. Figur 4 zeigt eine isometrische Schrägansicht der Bremseinrichtung und Figur 5 eine schematische Seitenansicht, in der wiederum wirkende Kräfte eingetragen sind.

Auch bei diesem Ausführungsbeispiel ist eine Bremszangeneinheit 10 eingesetzt, die zwei Bremsbeläge 20 trägt, die axial auf eine Bremsscheibe 1 gedrückt werden. Die Bremsbeläge 20 sind wiederum jeweils an einem Ende eines Bremszangenhebels 11 angeordnet, der um die Lagerstelle 12 schwenkbar gelagert ist. Am gegenüberliegenden Ende der Bremszangenhebel 11 wirkt ein Aktuator 13.

Zur Aufhängung der Bremszangeneinheit 10 sind an deren oberer Seite zwei Hängelaschen 33 vorgesehen, die unmittelbar das bremsbelagseitige jeweilige Ende der Bremszangenhebel 11 tragen. Weiter ist an einer Brücke zwischen den Lagerstellen 12 der Bremszangenhebel 11 oben und unten jeweils eine weitere Lasche angeordnet, die nachfolgend als erster Lenker 35 bzw. zweiter Lenker 36 bezeichnet werden.

Wie Figur 5 zeigt, wirkt eine erste Lagerreaktionskraft $F_1$ in den Hängelaschen 33, die in einem Abstand $h_1$ auf die Drehachse der Bremsscheibe 1 wirkt. In den Hängelaschen 33 oder in den Bolzen, mit denen die Hängelasche 33 fahrgestellseitig oder auf Seiten der Bremszangeneinheit 10 verbunden ist, sind Kraftsensoren angeordnet, die in Summe die Lagerreaktionskraft $F_1$ messen.

In dem ersten Lenker 35 bzw. dem zweiten Lenker 36 wirken die Lagerreaktionskräfte $F_2$ und $F_3$. Bedingt durch die Ausrichtung der ersten Lasche 35 und der zweiten Lasche 36 in jeweils einer Radialrichtung 4 tragen die Lagerreaktionskräfte $F_2$ und $F_3$ nicht zum Bremsmoment $M_B$ bei. Sie brauchen entsprechend nicht gemessen zu werden, um das Bremsmoment $M_B$ zu bestimmen. Damit reduziert sich die Bestimmung des Bremsmoments $M_B$ bei diesem Ausführungsbeispiel auf die Messung der Lagerreaktionskraft $F_1$, die folglich durch entweder jeweils einen Sensor an jeder Seite der Bremszangeneinheit gemessen werden kann oder in einem gemeinsamen Sensor in der hier nicht dargestellten fahrgestellseitigen Konsole.

BEZUGSZEICHENLISTE

1  Bremsscheibe
2  Drehachse der Bremsscheibe
3  Konsole
4  Radialrichtung

10  Bremszangeneinheit
11  Bremszangenhebel
12  Lagerstelle
13  Aktuator
14  Druckstangensteller
15  Montagesockel
16  Axiallagerscheibe

20  Bremsbelag

31  Längsbolzen
32  erster Querbolzen
33  Lasche
34  zweiter Querbolzen
35  erster Lenker
36  zweiter Lenker

$F_R$        Reibkraft
$F_1$ - $F_3$    Lagerreaktionskraft
$M_B$        Bremsmoment
$h_1, h_2$    Abstand (effektive Hebelarmlänge)

**Patentansprüche**

1.  Bremseinrichtung für ein Schienenfahrzeug mit einer Bremszangeneinheit (10), die über mindestens einen Bremsbelag (20) auf eine Bremsscheibe (1) einwirkt, und die mittels mindestens eines Verbindungselements an einer Konsole (3) eines Fahrwerks des Schienenfahrzeugs befestigbar ist, wobei über das mindestens eine Verbindungselement Lagerreaktionskräften ($F_1$, $F_2$, $F_3$) von der Bremszangeneinheit (10) auf die Konsole (3) übertragbar sind, und wobei an der Konsole (3) und/oder der Bremszangeneinheit (10) und/oder an dem mindestens einen Verbindungselement zwischen der Konsole (3) und der Bremszangeneinheit (10) mindestens ein Kraftsensor zur Messung von zumindest einer der Lagerreaktionskräfte ($F_1$, $F_2$) angeordnet ist, um ein auf die Bremsscheibe (1) wirkendes Bremsmoment ($M_B$) zu ermitteln, **dadurch gekennzeichnet, dass** das mindestens ein Verbindungelement so ausgebildet und/oder ausgerichtet ist, dass zumindest eine der Lagerreaktionskräfte ($F_3$) im Wesentlichen durch eine Drehachse (2) der Bremsscheibe (1) gerichtet ist.

2.  Bremseinrichtung nach Anspruch 1, bei der das mindestens eine Verbindungselement zwischen der Konsole (3) und der Bremszangeneinheit (10) ein Längsbolzen (31) ist, der so ausgerichtet ist, dass eine Verlängerung seiner Längsachse im Wesentlichen durch die Drehachse (2) der Bremsscheibe (1) verläuft.

3.  Bremseinrichtung nach Anspruch 2, bei der der Längsbolzen (31) ein Kraftmessbolzen ist, der dazu eingerichtet ist, senkrecht zu seiner Längsachse an zwei beabstandeten Punkten jeweils eine der Lagerreaktionskräfte ($F_1$, $F_2$) zu messen.

4. Bremseinrichtung nach Anspruch 2, bei der in der Konsole (3) und/oder an der Bremszangeneinheit (10) zwei voneinander beabstandete Kraftsensoren angeordnet sind, die dazu eingerichtet sind, jeweils eine der Lagerreaktionskräfte ($F_1$, $F_2$) zu messen, die senkrecht auf die Längsachse des Längsbolzen (31) wirkt.

5. Bremseinrichtung nach Anspruch 1, bei der das mindestens eine Verbindungselement zwischen der Konsole (3) und der Bremszangeneinheit (10) durch zwei Querbolzen (32, 34) gebildet ist, von denen einer die Konsole (3) und die Bremszangeneinheit (10) unmittelbar schwenkbar miteinander verbindet und der andere die Konsole (3) und die Bremszangeneinheit (10) über eine beidseitg schwenkbar gelagerte Hängelasche (33) miteinander verbindet.

6. Bremseinrichtung nach Anspruch 5, bei der die beiden Querbolzen (32, 34) Kraftmessbolzen sind, die dazu eingerichtet sind, quer zu ihrer Längsachse jeweils eine der Lagerreaktionskräfte ($F_1$, $F_2$) zu messen.

7. Bremseinrichtung nach Anspruch 1, bei der das mindestens eine Verbindungselement zwischen der Konsole (3) und der Bremszangeneinheit (10) zwei Hängelaschen (33) und zwei beidseitig um parallel zur Drehachse (2) verlaufende Achsen schwenkbar gelagerte Lenker (35, 36) sind, wobei eine jeweilige Verlängerung der Längsachse der Lenker (35, 36) durch die Drehachse (2) verläuft.

8. Bremseinrichtung nach Anspruch 1, bei der zwei Kraftsensoren vorgesehen sind, die dazu eingerichtet sind, in Längsrichtung der Hängelaschen (33) wirkende Kräfte als Lagerreaktionskräfte ($F_1$) zu messen.

9. Verfahren zum Bestimmen eines auf eine Bremsscheibe (1) wirkenden Bremsmoments ($M_B$) bei einer Bremseinrichtung eines Schienenfahrzeugs mit den folgenden Schritten:

   - Bereitstellen einer Bremseinrichtung mit einer Bremszangeneinheit (10), die über mindestens einen Bremsbelag (20) auf eine Bremsscheibe (1) einwirkt, und die mittels mindestens eines Verbindungselements an einer Konsole (3) eines Fahrwerks des Schienenfahrzeugs befestigt ist, wobei über das mindestens eine Verbindungselement Lagerreaktionskräfte ($F_1$, $F_2$, $F_3$) von der Bremszangeneinheit (10) auf die Konsole (3) übertragen werden, derart, dass zumindest eine der Lagerreaktionskräfte ($F_3$) im Wesentlichen durch eine Drehachse (2) der Bremsscheibe (1) gerichtet ist;
   - Messen von allen Lagerreaktionskräfte ($F_1$, $F_2$), die nicht durch eine Drehachse (2) der Bremsscheibe (1) gerichtet sind; und
   - Bestimmen des Bremsmoments ($M_B$) aus der mindestens einen gemessenen Lagerreaktionskraft ($F_1$, $F_2$) und eines Abstands ($h_1$, $h_2$), in dem diese Lagerreaktionskraft ($F_1$, $F_2$) auf die Drehachse (2) wirkt.

**Claims**

1. Braking device for a rail vehicle, having a brake calliper unit (10), which acts on a brake disc (1) by way of a brake pad (20) and can be secured to a bracket (3) of a bogie of the rail vehicle by means of at least one connecting element, wherein bearing reaction forces ($F_1$, $F_2$, $F_3$) can be transmitted from the brake calliper unit (10) to the bracket (3) by way of the at least one connecting element, and wherein at least one force sensor for measuring at least one of the bearing reaction forces ($F_1$, $F_2$) is located at the bracket (3) and/or the brake calliper unit (10) and/or at the at least one connecting element between the bracket (3) and the brake calliper unit (10) in order to detect a braking torque ($M_B$) acting on the brake disc (1), **characterised in that** the at least one connecting element is designed and/or aligned such that at least one of the bearing reaction forces ($F_3$) is substantially oriented through an axis of rotation (2) of the brake disc (1).

2. Braking device according to claim 1, wherein the at least one connecting element between the bracket (3) and the brake calliper unit (10) is a longitudinal bolt (31), which is oriented such that an extension of its longitudinal axis substantially extends through the axis of rotation (2) of the brake disc (1).

3. Braking device according to claim 2, wherein the longitudinal bolt (31) is a force-measuring bolt configured to measure one of the bearing reaction forces ($F_1$, $F_2$) each at right angles to its longitudinal axis at two spaced points.

4. Braking device according to claim 2, wherein two mutually spaced force sensors are located in the bracket (3) and/or at the brake calliper unit (10), which force sensors are configured to measure one of the bearing reaction forces ($F_1$, $F_2$) each which act at right angles to the longitudinal axis of the longitudinal bolt (31).

5. Braking device according to claim 1, wherein the at least one connecting element between the bracket (3) and the brake calliper unit (10) is represented by two transverse bolts (32, 34), one of which directly and pivotably connects the bracket (3) and the brake calliper unit (10) to each other and the other of which connects the bracket (3) and the brake calliper unit (10) to each other by way of a suspension bracket (33) which is pivotably mounted on both sides.

6. Braking device according to claim 5, wherein the two transverse bolts (32, 34) are force-measuring bolts configured to measure one of the bearing reaction forces ($F_1$, $F_2$) each at right angles to their longitudinal axis.

7. Braking device according to claim 1, wherein the at least one connecting element between the bracket (3) and the brake calliper unit (10) is represented by two suspension brackets (33) and two links (35, 36) pivotably mounted on both sides about axes which extend parallel to the axis of rotation (2), wherein a respective extension of the longitudinal axis of the links (35, 36) extends through the axis of rotation (2).

8. Braking device according to claim 1, wherein two force sensors are provided, which are configured to measure forces acting in the longitudinal direction of the suspension brackets (33) as bearing reaction forces ($F_1$).

9. Method for determining a braking torque ($M_B$) acting on a brake disc (1) in a braking device of a rail vehicle, the method comprising the following steps:

- the provision of a braking device having a brake calliper unit (10), which acts on a brake disc (1) by way of a brake pad (20) and is secured to a bracket (3) of a bogie of the rail vehicle by means of at least one connecting element, wherein bearing reaction forces ($F_1$, $F_2$, $F_3$) are transmitted from the brake calliper unit (10) to the bracket (3) by way of the at least one connecting element in such a way that at least one of the bearing reaction forces ($F_3$) is substantially oriented through an axis of rotation (2) of the brake disc (1);
- the measuring of all bearing reaction forces ($F_1$, $F_2$) which are not oriented through an axis of rotation (2) of the brake disc (1); and
- the determination of the braking torque ($M_B$) from the at least one measured bearing reaction force ($F_1$, $F_2$) and a distance ($h_1$, $h_2$) from which said bearing reaction force ($F_1$, $F_2$) acts on the axis of rotation (2).

**Revendications**

1. Dispositif de frein d'un véhicule ferroviaire ayant une unité (10) d'étrier de frein, qui agit sur un disque (1) de frein par l'intermédiaire d'au moins une garniture (20) de frein et qui peut être fixée à une console (3) d'un train de roulement du véhicule ferroviaire au moyen d'au moins un élément de liaison, des forces ($F_1$, $F_2$, $F_3$) de réaction de palier pouvant, par le au moins un élément de liaison, être transmises de l'unité (10) d'étrier de frein à la console (3) et au moins un capteur de force, pour mesurer au moins l'une des forces ($F_1$, $F_2$) de réaction de palier, étant monté sur la console (3) et/ou sur l'unité (10) d'étrier de frein et/ou sur le au moins un élément de liaison entre la console (3) et l'unité (10) d'étrier de frein, afin de déterminer un couple ($M_B$) de freinage agissant sur le disque (1) de frein, **caractérisé en ce que** le au moins un élément de liaison est constitué et/ou orienté de manière à ce qu'au moins l'une des forces ($F_3$) de réaction de palier passe sensiblement par un axe (2) de rotation du disque (1) de frein.

2. Dispositif de frein suivant la revendication 1, dans lequel le au moins un élément de liaison entre la console (3) et l'unité (10) d'étrier de frein est un boulon (31) longitudinal, orienté de manière à ce qu'un prolongement de son axe longitudinal passe sensiblement par l'axe (2) de rotation du disque (1) de frein.

3. Dispositif de frein suivant la revendication 2, dans lequel le boulon (31) longitudinal est un boulon dynamométrique, conçu pour mesurer, respectivement, l'un des forces ($F_1$, $F_2$) de réaction de palier, perpendiculairement à son axe longitudinal, en deux points à distance.

4. Dispositif de frein suivant la revendication 2, dans lequel, dans la console (3) et/ou sur l'unité (10) d'étrier de frein, sont disposés deux capteurs de force à distance l'un de l'autre, conçus pour mesurer chacun l'une des forces ($F_1$, $F_2$) de réaction de palier, qui s'appliquent perpendiculairement à l'axe longitudinal du boulon (31) longitudinal.

5. Dispositif de frein suivant la revendication 1, dans lequel le au moins un élément de liaison entre la console (3) et l'unité (10) d'étrier de frein est formé de deux boulons (32, 34) transversaux, dont l'un relie entre elles, directement à pivotement, la console (3) et l'unité (10) d'étrier de frein et l'autre relie entre elles la console (3) et l'unité (10) d'étrier de frein par un bras (33) de suspension, monté pivotant des deux côtés.

6. Dispositif de frein suivant la revendication 5, dans lequel les deux boulons (32, 34) transversaux sont des boulons dynamométriques, conçus pour mesurer, transversalement à leur axe longitudinal, chacun l'une des forces ($F_1$, $F_2$) de réaction de palier.

**7.** Dispositif de frein suivant la revendication 1, dans lequel le au moins un élément de liaison entre la console (3) et l'unité (10) d'étrier de frein sont deux bras (33) de suspension et deux biellettes (35, 36), montés pivotantes autour d'axes s'étendant parallèlement à l'axe (2) de rotation, un prolongement respectif de l'axe longitudinal des biellettes (35, 36) passant par l'axe (2) de rotation.

**8.** Dispositif de frein suivant la revendication 1, dans lequel il est prévu deux capteurs de force, conçus pour mesurer, comme forces ($F_1$) de réaction de palier, des forces s'appliquant dans la direction longitudinale des bras (33) de suspension.

**9.** Procédé de détermination d'un couple ($M_B$) de freinage agissant sur un disque (1) de frein dans un dispositif de freinage d'un véhicule ferroviaire, comprenant les stades suivants :

- on se procure un dispositif de frein ayant une unité (10) d'étrier de frein, qui agit sur un disque (1) de frein par l'intermédiaire d'au moins une garniture (20) de frein et qui est fixée à une console (3) d'un train de roulement du véhicule ferroviaire au moyen d'au moins un élément de liaison, des forces ($F_1$, $F_2$, $F_3$) de réaction de palier étant transmises de l'unité (10) d'étrier de frein à la console (3) par le au moins un élément de liaison, de manière à ce qu'au moins l'une des forces ($F_3$) de réaction de palier passe sensiblement par un axe (2) de rotation du disque (1) de frein ;
- on mesure toutes les forces ($F_1$, $F_2$) de réaction de palier, qui ne passent pas par un axe (2) de rotation du disque (1) de frein ; et
- on détermine le couple ($M_B$) de freinage à partir de la au moins une force ($F_1$, $F_2$) de réaction mesurée et d'une distance ($h_1$, $h_2$), suivant laquelle cette force ($F_1$, $F_2$) de réaction de palier s'applique à l'axe (2) de rotation.

Fig. 1

Fig. 2

EN GJS-400-15
RC 207991

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009118350 A2
- WO 2010069520 A2